(19) Europäisches Patentamt
European Patent Office
Office européen des brevets

(11) Veröffentlichungsnummer: **0 017 956**
**B1**

(12) # EUROPÄISCHE PATENTSCHRIFT

(45) Veröffentlichungstag der Patentschrift: **05.05.82**

(51) Int. Cl.³: **A 23 J 1/00,** A 23 J 1/04, A 23 J 1/20, A 23 L 1/325

(21) Anmeldenummer: **80102007.4**

(22) Anmeldetag: **15.04.80**

(54) **Verfahren zur Entfernung von lipoiden und wasserlöslichen Verbindungen aus Rohproteinen tierischen Ursprungs.**

(30) Priorität: **19.04.79 DE 2915734**

(43) Veröffentlichungstag der Anmeldung: **29.10.80 Patentblatt 80/22**

(45) Bekanntmachung des Hinweises auf die Patenterteilung: **05.05.82 Patentblatt 82/18**

(84) Benannte Vertragsstaaten: **AT BE CH DE FR GB IT LI LU NL SE**

(56) Entgegenhaltungen:
**DE-A-2 405 593**
**DE-A-2 510 631**
**GB-A-1 348 241**
**GB-A-1 409 876**
**US-A-3 798 126**
**US-A-3 879 370**

(73) Patentinhaber: **HOECHST AKTIENGESELLSCHAFT, Postfach 80 03 20, D-6230 Frankfurt/Main 80 (DE)**

(72) Erfinder: **Schlingmann, Merten, Dr., Schneidhainer Strasse 32a, D-6240 Königstein/Taunus (DE)**
Erfinder: **Nesemann, Georg, Dr., Bornstrasse 73, D-6238 Hofheim am Taunus (DE)**
Erfinder: **Präve, Paul, Dr., Pfarrstrasse 5, D-6232 Bad Soden am Taunus (DE)**
Erfinder: **von Rymon Lipinski, Gert-Wolfhard, Dr., Hoerselbergstrasse 5, D-6230 Frankfurt am Main 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

EP 0 017 956 B1

# Verfahren zur Entfernung von lipoiden und wasserlöslichen Verbindungen aus Rohproteinen tierischen Ursprungs

Die Erfindung betrifft ein Verfahren zur Entfernung von lipoiden und wasserlöslichen Verbindungen aus Rohproteinen tierischer Herkunft, um eine Beeinträchtigung von Geruch, Geschmack, Nährwert und Verträglichkeit der Proteine zu vermeiden. Negative Auswirkungen auf den Geruch haben z.B. Folgeprodukte aus Oxydationsreaktionen ungesättigter Fettsäuren; Peptide bestimmter Konstitution rufen Bittergeschmack hervor. Nukleinsäuren können zu pathologischen Zuständen (Gicht, Harnsteine) führen. Die Verwendbarkeit der Rohproteine in Futter- und besonders Nahrungsmitteln wird durch den Gehalt solcher Verbindungen stark eingeschränkt.

Aufgabe der vorliegenden Erfindung ist es daher, lipoide Verbindungen, wie Fettoxidationsprodukte, Nukleinsäuren, Peptide mit hohem Gehalt an hydrophoben Aminosäuren, und bestimmte Kohlehydrate wie z.B. Lactose aus Rohproteinen tierischer Herkunft zu entfernen, und damit den Proteinanteil, der entscheidend für den nutritiven Wert ist, zu erhöhen.

Nach bekannten Verfahren werden die Lipide aus Rohproteinen tierischer Herkunft durch organische Lösungsmittel herausgelöst, oder durch mechanische Verfahren wie z.B. Separieren abgetrennt.

Nachteilig ist dabei die Dauer der Extraktion. Die Behandlung der getrockneten Rohproteine mit organischen Lösemitteln, wie Hexan oder Chlorkohlenwasserstoffen ist zeitraubend und führt zu Produkten, die aufgrund der Restfettgehalte (1–4%) weder geruchsfrei noch geschmacksstabil sind.

Die mechanische Abtrennung von Fetten in sog. Separatoren ist sehr energieintensiv und führt ebenfalls zu Produkten, die aufgrund von Restgehalten an lipoiden Verbindungen von 1–2% weder geruchs- noch geschmacksneutral sind.

Aus der DE-A-2 405 593 ist auch schon die Behandlung von Proteinmaterial zunächst mit einem organischen Lösungsmittel und anschliessend mit Alkali und aus der US-A-3 798 126 die umgekehrte Reihenfolge der Verfahrensschritte bekannt. Die Anwendung einer Extraktionsmischung aus Ammoniak oder Ammoniumhydroxid und einem organischen Lösungsmittel ist jedoch noch nicht beschrieben worden. Vor allem aber war nicht zu erwarten, dass eine derartige Extraktionsmischung eine ganz besonders schonende und bei niedrigen Temperaturen durchführbare Arbeitsweise erlauben würde.

Gegenstand der Erfindung ist nun ein Verfahren zur Entfernung von lipoiden und wasserlöslichen Verbindungen aus Proteinmaterial tierischen Ursprungs, bei dem man die getrockneten und zerkleinerten Rohproteine mit einer Extraktionsmischung aus Ammoniak oder Ammoniumhydroxyd und einem organischen Lösungsmittel der allgemeinen Formel I

$$R_1-(C_nH_{2n})-OR_2 \qquad (I)$$

worin entweder $R_1$ und $R_2$ Wasserstoff bedeuten und n für eins, zwei oder drei steht, oder worin $R_1$ die Hydroxygruppe und $R_2$ Wasserstoff, Methyl oder Äthyl bedeuten und n für zwei oder drei steht, behandelt und nach Abtrennen der Extraktionsmischung den Rückstand des Rohproteins mit Wasser wäscht.

Als getrocknetes und zerkleinertes, insbesondere gemahlenes oder pulverisiertes Proteinmaterial tierischer Herkunft werden Proteinträger wie Fischmehl, Krillmehl, Molke-, Milch- und Magermilchpulver verwendet.

Als Lösungsmittel der Formel I kommen Alkohole wie Methanol, Äthanol, n-Propanol und iso-Propanol in Betracht. Bevorzugt sind Methanol und Äthanol, insbesondere Methanol.

Ausser den genannten Alkoholen eignen sich Glykole und ihre Monoäther der Formel I, namentlich Glykol und Monomethylglykol.

Ammoniak kann den genannten Lösungsmitteln gasförmig ($NH_3$) oder als konzentrierte wässrige Lösung ($NH_4OH$) zugesetzt werden. Die Wahl erfolgt nach Wassergehalt des Proteinmaterials, sowie nach Menge und Wassergehalt des eingesetzten Lösungsmittels. $NH_4OH$ eignet sich bei Material mit geringem Feuchtigkeitsgehalt (0–15%), $NH_3$ dagegen besser bei Material mit höherem Wassergehalt (10–30%).

Die Entferung der lipoiden Verbindungen hängt vom Gesamtwassergehalt, der in Gew.-% auf die verwendete Lösungsmittelmenge bezogen wird, und von der $NH_3$-Konzentration in Gew.-%, bezogen auf das eingesetzte Lösungsmittel ab.

Besonders gute Versuchsergebnisse liessen sich bei Proteinmaterial-Lösungsmittel-Gewichtsverhältnissen von 1 : 3 bis 1 : 10 bei Methanol und Äthanol und 1 : 8 bis 1 : 15 bei Propanol, Glykol und den Monoglykoläthern erzielen. Die Ammoniakkonzentrationen, bezogen auf die Lösungsmittelmenge, betrug 1–20 Gew.-%, vorzugsweise 5–15 Gew.-%, insbesondere 7–12 Gew.-%. Die Summe der Wassermengen, die herrühren aus Proteinmaterial, Lösungsmittel und gegebenenfalls aus wässrigem Ammoniak, betragen 0–30 Gew.-%, bevorzugt 0–20 Gew.-%, insbesondere 0–10 Gew.-%, bezogen auf die eingesetzte Lösungsmittelmenge.

Das Lösen der Fette aus den trocknen Rohprodukten wird so durchgeführt, dass das Proteinmaterial im Lösungsmittel suspendiert und $NH_3$ eingeleitet oder $NH_4OH$ zugegeben wird. Zweckmässig ist das Durchmischen der Suspension durch Rühren. Die Behandlungstemperaturen liegen im allgemeinen im Bereich von –20 °C bis +60 °C, wobei ein Bereich von +5 bis +50 °C und insbesondere von +10 bis +30 °C bevorzugt ist. Die Behandlungsdauer beträgt 5 bis 180 Minuten und liegt vorzugsweise bei 35–60 Minuten. Die Behandlung wird im allgemeinen bei Normaldruck durchgeführt.

Nach Beendigung der Lösungsmittel-Ammoniak-Behandlung wird der entfettete Rückstand nach bekannten Verfahren wie Zentrifugieren, Filtration und Sedimentation vom Lösungsmittel getrennt.

Bevorzugt wird die Filtration. Der erhaltene feste Rückstand kann zur möglichst vollständigen Entfernung der Lipide mit einem organischen Lösungsmittel der Formel I nochmals behandelt werden. Der Rückstand kann zur Entfernung von Lösungsmittelresten und Ammoniak getrocknet werden. Zweckmässig wird dies unter vermindertem Druck, vorzugsweise 80–150 Torr, und erhöhter Temperatur, vorzugsweise 40 °–50 °C, durchgeführt. Die so entfetteten und getrockneten Produkte sind fast geruchslos und haben eine hellere Farbe als die Ausgangsmaterialien.

Die nach dem vorstehend genannten Verfahren vom festen Rückstand abgetrennte flüssige Phase enthält Ammoniak und lipoide Verbindungen. Das eingesetzte Lösungsmittel kann durch Vakuumdestillation von den Fetten abgetrennt und wieder eingesetzt werden. Die danach verbleibenden Fette können den üblichen Methoden der Fettraffination unterworfen werden.

Anschliessend wird dieses entfettete und gegebenenfalls getrocknete Proteinmaterial in Wasser aufgenommen. Bevorzugt sind Wassermengen, die zum Proteinmaterial im Gew.-Verhältnis 1:1 bis 1:30, insbesondere 1:5 bis 1:15, stehen. Die Wassermenge wird mindestens so bemessen, dass ein Rühren der Suspension möglich ist.

Der pH-Wert während der Wasserbehandlung soll im Bereich von 4–9,5, bevorzugt 5–9,0 liegen und wird gegebenenfalls auf diesen Bereich eingestellt. Dies ist insbesondere dann notwendig, wenn nicht oder nicht vollständig getrocknetes Proteinmaterial aus der ersten Extraktionsstufe verwendet wird, das dann auch noch Restmengen an Ammoniak enthält, was zu einem zu hohen pH-Wert führen kann. Die Extraktion mit Wasser hat das Ziel, den Gehalt unerwünschter Stoffe wie Nucleinsäuren, bittere Peptide oder Kohlehydrate, wie z.B. Lactose, zu senken, sowie die funktionellen Eigenschaften des Proteins, wie z.B. Schaumbildung oder Emulgierfähigkeit, zu verbessern.

Die Extraktion mit Wasser wird im allgemeinen in einem Temperaturbereich von 30–95 °C bei Normaldruck durchgeführt. Bevorzugt sind Temperaturen von 40–70 °C, besonders bevorzugt 50–60 °C. Die Extraktionsdauer kann je nach Extraktionstemperatur und Wassermenge 5–120 Minuten betragen; gute Ergebnisse erzielt man mit 25–45 minütiger Extraktionszeit. Zur Trennung fester und flüssiger Bestandteile wird die Suspension, vorzugsweise bei Temperaturen von 10–30 °C, filtriert. Andere geeignete Trennverfahren sind Sedimentation und Zentrifugation.

Die feste Phase wird nach bekannten Verfahren wie Gefrier-, Vakuum- oder Sprühtrocknung von Flüssigkeitsresten befreit.

Die so erhaltenen Proteinprodukte haben angenehmere Geschmacks- und Geruchseigenschaften, sehr hohes Wasserbindevermögen und einen deutlich höheren Proteingehalt als die Ausgangsmaterialien.

Die erfindungsgemäss erhaltenen Proteinprodukte haben einen besonders niedrigen Gehalt an lipoiden Verbindungen (0,03–0,8 Gew.-%) und Nucleinsäure (0,0–0,5 Gew.-%), weshalb sie als Futtermittel und speziell als Nahrungsmittel besonders geeignet sind.

Das Verfahren gemäss der Erfindung vermeidet die Nachteile bekannter Lösungsmittelextraktionen wie grosse Lösungsmittelmengen, lange Behandlungszeiten oder physikalische Trennprozesse mit hohem Energieverbrauch.

Das erfindungsgemäss verwendete Ammoniak wirkt nicht nur als Lösungsmittel, sondern verändert auch die mechanische Struktur der Rohproteine, wodurch die Extraktionszeit herabgesetzt und die Extraktionswirkung verbessert wird.

Das Verfahren wird durch die folgenden Beispiele beschrieben.

Beispiel 1:

100 g Fischmehl mit 5% Restfeuchte, 8,4% Rohfett (nach saurer Hydrolyse), 56% Rohprotein (Nx6,25), 2,8% Nucleinsäure und 16,4% Asche wurden in 400 ml Methanol suspendiert. Unter Rühren der Suspension wurden 15 g $NH_3$-Gas eingeleitet und gelöst. Das Gemisch aus Methanol, Ammoniak und Mehl wurde 45 Minuten bei 20 °C gerührt.

Zur Trennung der festen und flüssigen Phase wurde filtriert und der feste Rückstand zweimal mit 100 ml Methanol gewaschen. Nach erneuter Filtration wurden alle Filtrate vereinigt. Diese braune Lösung enthielt die lipoiden Verbindungen der eingesetzten Ausgangssubstanz. Methanol und Ammoniak wurden durch Destillation unter vermindertem Druck (100 Torr, 40 °C) entfernt. Der Rückstand, der 15,2 Gew.-% der eingesetzten Trockenmasse betrugt, war ein braunes, stark nach Fisch riechendes Öl.

Der bei der Filtration erhaltene feste Rückstand des extrahierten Mehls wurde bei einem verminderten Druck von 100 Torr bei 40 °C 5 Stunden lang getrocknet. Es wurden 78 g entfettetes Mehl mit einer Restfeuchte von 3% erhalten, das nur noch schwachen Fischgeruch aufwies und eine hellere Farbe als das Ausgangsmaterial hatte.

Zur Verminderung des Gehaltes unerwünschter wasserlöslicher Verbindungen wurde dieses Mehl in 600 ml Wasser suspendiert. Der pH-Wert der durch Rühren homogenisierten Suspension betrug 6.9.

Nach Erhöhung der Temperatur auf 55 °C wurde noch 20 Minuten weitergerührt, auf 30 °C abgekühlt und durch Filtration in feste und flüssige Phase getrennt. Das erhaltene Sediment wurde erneut mit 300 ml Wasser vermischt und 10 Min. bei 20 °C gerührt. Danach wurde wieder filtriert und das Sediment unter vermindertem Druck getrocknet. So konnten 68 g eines Eiweisskonzentrates gewonnen werden, das auf Grund des stark reduzierten typischen Geruchs wesentlich breitere

Anwendung finden kann als das ursprüngliche Produkt.

Beispiel 2:

100 g Fischmehl wurde wie in Beispiel 1 beschrieben, extrahiert, jedoch werden statt gasförmigem $NH_3$ 40 ml konzentriertes $NH_4OH$ (33%-ig) als Reagenz verwendet.

Beispiel 3:

Es wurde wie in Beispiel 1 verfahren, jedoch wurden 30 g $NH_3$ eingesetzt.

Beispiel 4:

Bei einer Verfahrensweise wie in Beispiel 1 wurde statt Methanol Äthanol als Lösungsmittel verwendet.

Beispiel 5:

Es wurde verfahren wie in Beispiel 1. Statt Methanol wurde i-Propanol als Lösungsmittel eingesetzt.

Beispiel 6:

Als Ausgangsmaterial wurden 100 g Krillmehl mit einer Restfeuchte von 4,7%, 11,2% Rohfett, 54% Rohprotein, 3,4% Nucleinsäure und 15,3% Asche verwendet. Das Produkt wurde den in Beispiel 3 beschriebenen Verfahrensschritten unterworfen. Danach konnten 60,4 g eines Eiweisskonzentrates mit nurmehr schwachem Eigengeruch isoliert werden.

Beispiel 7:

Als Ausgangsmaterial wurde das in Beispiel 6 beschriebene Krillmehl verwendet und nach den in Beispiel 3 beschriebenen Bedingungen extrahiert. Jedoch wurde nach der Entfettung auf eine vollständige Trocknung des lösungsmittelfeuchten Rückstandes verzichtet. Der gründlich abgesaugte Filterkuchen mit einem Feststoffgehalt von 58% wurde in 800 ml Wasser suspendiert, wobei sich der pH-Wert auf 9.0 einstellte, bedingt durch den in der feuchten Masse verbliebenen Ammoniak.

Die Temperatur der Suspension wurde unter Rühren auf 50 °C erhöht und nach 45 Min. der pH-Wert durch Zugabe von HCl auf 5,8 eingestellt. Danach wurde noch 15 Min bei 65 °C weitergerührt, dann auf 40 °C abgekühlt und filtriert. Das erhaltene Sediment wurde getrocknet, wonach 57,3 g eines Eiweisskonzentrates mit 85% Protein verblieben.

Beispiel 8:

Es wurde nach den gleichen Bedingungen wie in Beispiel 7 beschrieben, verfahren, jedoch Äthanol statt Methanol als Lösungsmittel verwendet.

Beispiel 9:

Bei einer Verfahrensweise wie in Beispiel 6 beschrieben, wurde i-Propanol statt Methanol als Lösungsmittel verwendet.

Beispiel 10:

Als Ausgangsmaterial wurden 100 g Vollmilchpulver mit einer Restfeuchte von 3,5%, 26% Eiweiss, 26,2% Fett und 7% Asche verwendet.

Das Pulver wurde in 800 ml Äthanol suspendiert und unter Rühren der Mischung 25 g $NH_3$-Gas bei 10 °C eingeleitet und gelöst. Unter langsamer Erwärmung auf 30 °C wurde das Gemisch 30 Min. gerührt und anschliessend zur Trennung der festen und flüssigen Bestandteile filtriert und der Filterkuchen zweimal mit je 150 ml Äthanol gewaschen. Die gesammelten Filtrate wurden durch Vakuumdestillation (100 Torr, 45 °C) eingeengt, wonach 35 g einer gelben Paste verblieben, die zur Hauptsache aus extrahiertem Fett bestand.

Der bei der Filtration erhaltene feste Rückstand des extrahierten Pulvers wurde im Vakuum getrocknet (100 Torr, 45 °C, 4 Stunden). Danach verblieben 62,8 g eines weissen, von typischem Milchgeruch und -geschmack befreiten Eiweissproduktes. Die funktionellen Eigenschaften verbessern sich durch die beschriebene Art der Fettextration entscheidend. Das entfettete Produkt eignet sich z.B. als Eiweisszusatz in Backwaren oder als Grundstoff für Schäume.

Beispiel 11:

Es wurde wie in Beispiel 10 beschrieben verfahren, jedoch Methanol statt Äthanol als Lösungsmittel verwendet.

Beispiel 12:

Ausgangsmaterial war das in Beispiel 10 verwendete Vollmilchpulver, das nach den dort angegebenen Bedingungen entfettet wurde.

Jedoch wurde nach der Entfettung auf eine vollständige Trocknung des lösungsmittelfeuchten Rückstandes verzichtet. Der gründlich abgesaugte Filterkuchen mit einem Feststoffgehalt von 54% wurde in 500 ml Wasser suspendiert, wobei sich der pH-Wert auf 9,0 einstellte, bedingt durch den in der lösungsmittelfeuchten Masse verbliebenen Ammoniak.

Nach Erhöhung der Temperatur in der wässrigen, gerührten Suspension auf 50 °C erfolgte nach 15 Minuten eine pH-Wert-Verschiebung durch Zugabe von HCl auf 4.5, wobei sich durch Ausfällen von Eiweiss ein flockiger Niederschlag bildete. Anschliessend wurde noch 15 Min. bei 20 °C weitergerührt und dann der gebildete Niederschlag abfiltriert. Der Filterkuchen wurde einmal mit 200 ml Wasser gewaschen, dann in 100 ml Wasser suspendiert und der pH-Wert mit NaOH auf 7,0 gestellt und gefriergetrocknet. Das weisse, geruchlose Trockenprodukt (25,1 g) ist ein Eiweissisolat mit sehr guten Schaum- und Emulgiereigenschaften.

Beispiel 13:

Als Ausgangsmaterial wurden 100 g Magermilchpulver mit einer Restfeuchte von 4,3%, 1,1% Fett, 36% Protein und 7,8% Asche verwendet und den in Beispiel 10 genannten Bedingungen unterworfen.

Danach fielen 75,3 g eines weissen, geschmacklosen Produktes mit einem Eiweissgehalt von 46,0% an.

Beispiel 14:

100 g Magermilchpulver, wie in Beispiel 13 verwendet, wurden nach den in Beispiel 12 beschriebenen Verfahrensschritten behandelt.

Es liessen sich so 37,2 g eines weissen, geruch- und geschmacklosen Eiweissisolates mit sehr guten Schaum und Emulgiereigenschaften herstellen.

Tabelle I:
Einige analytische Daten der Produkte vor und nach dem Prozess. Gew.-% auf Trockenmasse bezogen.

| Ausgangsprodukte je 100 g Mehl oder Pulver | | | | | Endprodukte | | | |
|---|---|---|---|---|---|---|---|---|
| Beispiel | Art | Rohfett Gew.-% | Nukleins. Gew.-% | Protein Gew.-% | Menge (g) | Rohfett Gew.-% | Nukleins. Gew.-% | Protein Gew.-% |
| 1 | Fisch | 8.4 | 2.8 | 56 | 68.0 | 0.4 | 0.7 | 78.0 |
| 2 | Fisch | 8.4 | 2.8 | 56 | 70.1 | 0.6 | 0.7 | 75.2 |
| 3 | Fisch | 8.4 | 2.8 | 56 | 66.7 | 0.2 | 0.6 | 79.5 |
| 4 | Fisch | 8.4 | 2.8 | 56 | 67.2 | 0.4 | 0.7 | 78.5 |
| 5 | Fisch | 8.4 | 2.8 | 56 | 73.1 | 0.9 | 0.8 | 74.9 |
| 6 | Krill | 11.2 | 3.4 | 54 | 60.4 | 0.7 | 0.9 | 78.2 |
| 7 | Krill | 11.2 | 3.4 | 54 | 57.3 | 0.5 | 0.7 | 85.0 |
| 8 | Krill | 11.2 | 3.4 | 54 | 77.9 | 0.6 | 0.8 | 83.5 |
| 9 | Krill | 11.2 | 3.4 | 54 | 61.2 | 1.1 | 0.8 | 76.7 |
| 10 | Vollmilch | 26.2 | – | 26 | 62.8 | 0.9 | – | 39.8 |
| 11 | Vollmilch | 26.2 | – | 26 | 62.0 | 0.7 | – | 40.1 |
| 12 | Vollmilch | 26.2 | – | 26 | 25.1 | 0.5 | – | 91.2 |
| 13 | Magermilch | 1.1 | – | 36 | 75.3 | 0.05 | – | 46.0 |
| 14 | Magermilch | 1.1 | – | 36 | 37.2 | 0.04 | – | 92.4 |

**Patentansprüche**

1. Verfahren zur Entfernung von lipoiden und wasserlöslichen Verbindungen aus Proteinmaterial tierischen Ursprungs, dadurch gekennzeichnet, dass man das getrocknete und zerkleinerte Rohprotein mit einer Extraktionsmischung aus Ammoniak oder Ammoniumhydroxyd und einem organischen Lösungsmittel der allgemeinen Formel I

$$R_1-(C_nH_{2n})-OR_2 \quad (I)$$

worin entweder $R_1$ und $R_2$ Wasserstoff bedeuten und n für eins, zwei oder drei steht, oder worin $R_1$ die Hydroxygruppe und $R_2$ Wasserstoff, Methyl oder Äthyl bedeuten und n für zwei oder drei steht, behandelt, und nach Abtrennen der Extraktionsmischung den Rückstand des Proteinmaterials mit Wasser wäscht.

2. Verfahren nach Anspruch 1, dadurch gekennzeichnet, dass der Gesamt-Wassergehalt während der Extraktion 0 bis 30 Gew.-%, vorzugsweise 0 bis 20 Gew.-%, insbesondere 0 bis 10 Gew.-%, bezogen auf die eingesetzte Lösungsmittelmenge, beträgt.

3. Verfahren nach Anspruch 1 und 2, dadurch gekennzeichnet, dass der $NH_3$-Gehalt während der Extraktion 1 bis 20 Gew.-%, vorzugsweise 5 bis 15 Gew.-%, insbesondere 7 bis 12 Gew.-%, bezogen auf die eingesetzte Lösungsmittelmenge, beträgt.

**Revendication**

1. Procédé pour la séparation de composés lipoîdes et solubles dans l'eau d'un matériau protéinique d'origine animale, caractérisé en ce qu'on traite la protéine brute séchée et pulvérisée avec un mélange d'extraction constitué d'ammoniac ou d'hydroxyde d'ammonium et d'un solvant organique de formule générale I:

$$R_1-(C_nH_{2n})-OR_2 \quad (I)$$

dans laquelle soit $R_1$ et $R_2$ représentent l'hydrogène et n est 1, 2 ou 3, soit $R_1$ représente le groupe hydroxy et $R_2$ représente l'hydrogène ou un groupe méthyle ou éthyle et n est 2 ou 3, puis après séparation du mélange d'extraction on lave le résidu du matériau protéinique avec de l'eau.

2. Procédé selon la revendication 1, caractérisé en ce que la teneur en eau totale, pendant l'extraction, représente de 0 à 30% en poids, de préférence de 0 à 20% en poids, avantageusement de 0 à 10% en poids de la quantité de solvant utilisée.

3. Procédé selon la revendication 1 ou 2, caractérisé en ce que la teneur en $NH_3$ pendant l'extraction représente de 1 à 20% en poids, de préférence de 5 à 15% en poids, avantageusement de 7 à 12% en poids, de la quantité de solvant utilisée.

**Claims**

1. Process for the removal of lipoid and watersoluble compounds from protein material of animal origin, characterized by treating the dried and grinded crude protein with an extraction mixture consisting of ammonia or ammonium hydroxide and an organic solvent of the general formula I

$$R_1\text{–}(C_2H_{2n})\text{–}OR_2 \qquad (I)$$

wherein either $R_1$ and $R_2$ mean hydrogen and n is one, two or three or wherein $R_1$ means hydroxy and $R_2$ means hydrogen, methyl or ethyl and n is two or three, and after separating the extraction mixture washing the residue with water.

2. Process as claimed in claim 1, wherein the total water content during the extraction process ranges from 0 to 30, preferably 0 to 20, especially from 0 to 10% by weight, calculated on the quantity of solvent used.

3. Process as claimed in claims 1 and 2, wherein the $NH_3$ content during the extraction ranges from 1 to 20, preferably 5 to 15, especially 7 to 12% by weight, calculated on the quantity of solvent used.